# EUROPEAN PATENT APPLICATION

(11) **EP 4 550 275 A1**
(43) Date of publication of application: **07.05.2025**
(21) Application number: 24209287.2
(22) Date of filing: 28.10.2024
(51) Int. Cl.: G06V 10/82, G06V 20/52, G06V 40/10

(54) **IMAGE PROCESSING APPARATUS, IMAGE PROCESSING METHOD, PROGRAM, AND STORAGE MEDIUM**

(30) Priority: 02.11.2023 JP 2023188252
(71) Applicant: CANON KABUSHIKI KAISHA, Tokyo 146-8501 (JP)
(72) Inventor: SWYSEN, Ken, Tokyo, 146-8501 (JP)
(74) Representative: Canon Europe Limited

(57) **Abstract**

An image processing apparatus includes a first extraction means for extracting a first subject image from a first image captured by a first imaging unit, a second extraction means for extracting a second subject image from a second image captured by a second imaging unit, a first estimation means for estimating a three-dimensional shape of the first subject based on the first subject image, a second estimation means for estimating a second subject state based on the second subject image, an acquisition means for acquiring a predictive image predicted to be acquired when the first subject is captured by the second imaging unit based on the estimation results of the first subject's three-dimensional shape and the second subject's state, and a determination means for determining whether the first subject and the second subject are identical by comparing the predictive image with the second subject image.

## Description

### BACKGROUND OF THE INVENTION

### Field of the Invention

The present invention relates to an image processing apparatus, an image processing method, a program, and a storage medium.

### Description of the Related Art

In recent years, there have been increasing demands for improvement in sales activities in large commercial facilities and security maintenance in smart cities. In such use cases, a plurality of cameras is assumed to be installed in a large-scale area. To record a log of personal activities from camera images and utilize the log for analysis, tracking the activities of a specific person is effective. For this purpose, a system is used to identify the same person by using different cameras. Y. Sun, *"Beyond Part Models: Person Retrieval with Refined Part Pooling",* ECCV2018 discusses a technique for identifying a person by using feature quantity vectors based on pixel information for different regions formed by dividing a personal image in the height direction.

### SUMMARY OF THE INVENTION

According to a first aspect of the present invention, there is provided an image processing apparatus as specified in claims 1 to 12. According to a second aspect of the present invention, there is provided an image processing method as specified in claim 13. According to a third aspect of the present invention, there is provided a program as specified in claim 14. According to a fourth aspect of the present invention, there is provided a storage medium as specified in claim 15.

Further features of the present invention will become apparent from the following description of embodiments with reference to the attached drawings.

### BRIEF DESCRIPTION OF THE DRAWINGS

Fig. 1 illustrates an example of a hardware configuration of an image processing system.
Fig. 2 illustrates an example of a functional configuration of an image processing apparatus according to a first embodiment.
Fig. 3 is a flowchart illustrating processing of the image processing apparatus according to the first embodiment.
Figs. 4A to 4C illustrate specific examples of a target image used in the first embodiment.
Fig. 5 illustrates a data flow of the image processing apparatus according to the first embodiment.
Figs. 6A and 6B illustrate processing of an identification unit according to the first embodiment.
Fig. 7 illustrates an example of a functional configuration of an image processing apparatus according to a second embodiment.
Fig. 8 illustrates specific examples of a target image used in the second embodiment.
Fig. 9 illustrates a data flow of the image processing apparatus according to the second embodiment.
Fig. 10 illustrates an example of a functional configuration of an image processing apparatus according to a third embodiment.
Fig. 11 illustrates specific examples of a target image used in the third embodiment.
Fig. 12 illustrates a data flow of the image processing apparatus according to the third embodiment.
Fig. 13 illustrates a specific example of a target image used in a fourth embodiment.
Figs. 14A and 14B are flowcharts illustrating processing of an image processing apparatus according to the fourth embodiment.
Fig. 15 illustrates a data flow of the image processing apparatus according to the fourth embodiment.
Fig. 16 illustrates an example of a functional configuration of an image processing apparatus according to a fifth embodiment.
Figs. 17A and 17B illustrate specific examples of a target image used in the first embodiment.
Figs. 18A to 18C illustrate specific examples of a target image used in a sixth embodiment.
Fig. 19 illustrates a data flow of an image processing apparatus according to the sixth embodiment.
Fig. 20 illustrates an example of a functional configuration of an image processing apparatus according to a seventh embodiment.
Fig. 21 illustrates a data flow of the image processing apparatus according to the seventh embodiment.

### DESCRIPTION OF THE EMBODIMENTS

Embodiments of the present invention will be described below with reference to the accompanying drawings. Each of the embodiments of the present invention described below can be implemented solely or as a combination of a plurality of the embodiments or features thereof where necessary or where the combination of elements or features from individual embodiments in a single embodiment is beneficial.

Configurations described in the following embodiments are to be considered as illustrative, and the present invention is not limited to the illustrated configurations.

In the technique discussed in Y. Sun, *"Beyond Part Models: Person Retrieval with Refined Part Pooling",* ECCV2018, it may be difficult to identify the same person by using different cameras because of a different installation position and a different viewing angle for each camera. For example, assume a region of the upper body of a person wearing a white shirt and carrying a large black backpack on its back. When this region is viewed from the front side, white pixel information becomes noticeable. When this region is viewed from the back side, black pixel information becomes noticeable. Thus, a large difference occurs between the feature quantity vectors.

The following embodiment is directed to accurately identifying an identical moving object captured by different cameras.

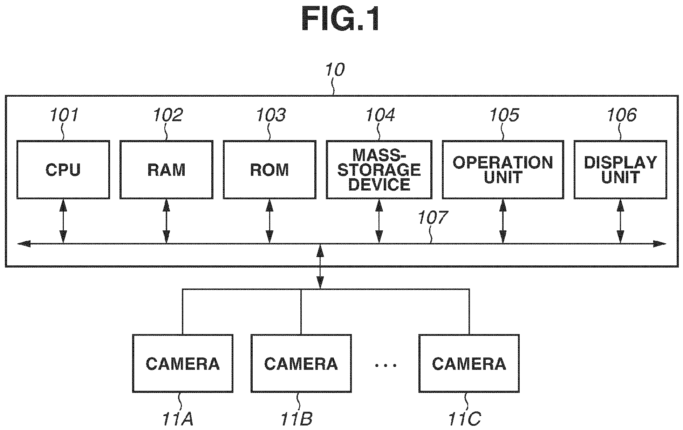

Fig. 1 illustrates an example of a hardware configuration of an image processing system. The image processing system includes a plurality of cameras 11A, 11B, ..., and 11C disposed at predetermined spaces, and an image processing apparatus 10. The image processing apparatus 10 connects with and communicate information with the plurality of cameras 11A to 11C. The image processing apparatus 10 is a computer apparatus, such as a personal computer (PC), smart phone, and tablet terminal apparatus.

The image processing apparatus 10 will now be described. As illustrated in Fig. 1, the image processing apparatus 10 includes a CPU 101, a RAM 102, a ROM 103, a mass-storage device 104, an operation unit 105, and a display unit 106. The CPU 101, the RAM 102, the ROM 103, the mass-storage device 104, the operation unit 105, and the display unit 106 are connected with each other via a bus 107.

The CPU 101 performs various processing by using a computer program and data stored in the ROM 103 and the mass-storage device 104. With this configuration, the CPU 101 controls the entire image processing apparatus 10.

The RAM 102 includes an area for storing computer programs and data loaded from the ROM 103 and the mass-storage device 104, and an area for storing images received from the cameras 11A to 11C. The RAM 102 also includes a work area to be used by the CPU 101 to perform various processing. The RAM 102 can suitably provide various areas in such a way.

The ROM 103 stores setting data of the image processing apparatus 10, computer programs and data related to the activation, and computer programs and data related to basic operations.

The mass-storage device 104 is, for example, a hard disk drive apparatus. The mass-storage device 104 stores an operating system (OS), and computer programs and data used by the CPU 101 to perform various processing of the image processing apparatus 10. The data stored in the mass-storage device 104 also includes data (e.g., model parameters) related to a learned model. The computer programs and data stored in the mass-storage device 104 are suitably loaded into the RAM 102 under the control of the CPU 101 to be processed thereby.

The operation unit 105 is an input device, such as a keyboard, mouse, and touch panel. The CPU 101 receives various instructions through user operations on the operation unit 105.

The display unit 106 is a display device, such as a liquid crystal panel and a touch panel display.

The CPU 101 displays images and texts representing a processing result on the display unit 106. The display unit 106 may be a projection apparatus, such as a projector, for projecting images and texts.

The image processing apparatus 10 receives captured images from the cameras 11A to 11C.

An image captured by each camera is supplied with the time when the image is captured. The image processing apparatus 10 refers to the relevant time to recognize the time series of images after image reception.

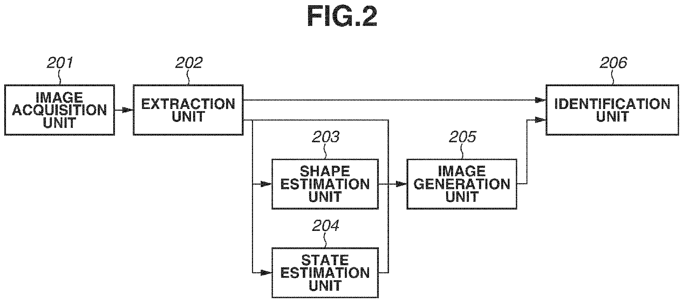

Fig. 2 is a block diagram illustrating a functional configuration of the image processing apparatus 10 according to a first embodiment. The CPU 101 executes computer programs stored in the ROM 103 or the mass-storage device 104 to implement the functions of an image acquisition unit 201, an extraction unit 202, a shape estimation unit 203, a state estimation unit 204, an image generation unit 205, and an identification unit 206.

The image acquisition unit 201 sequentially acquires images from the cameras 11A to 11C at predetermined time intervals and provides the extraction unit 202 with these images. The image acquisition unit 201 not only receives captured images from the cameras 11A to 11C. For example, the image acquisition unit 201 may also receive images through streaming via a network or video data (recorded video) through reading from the mass-storage device 104.

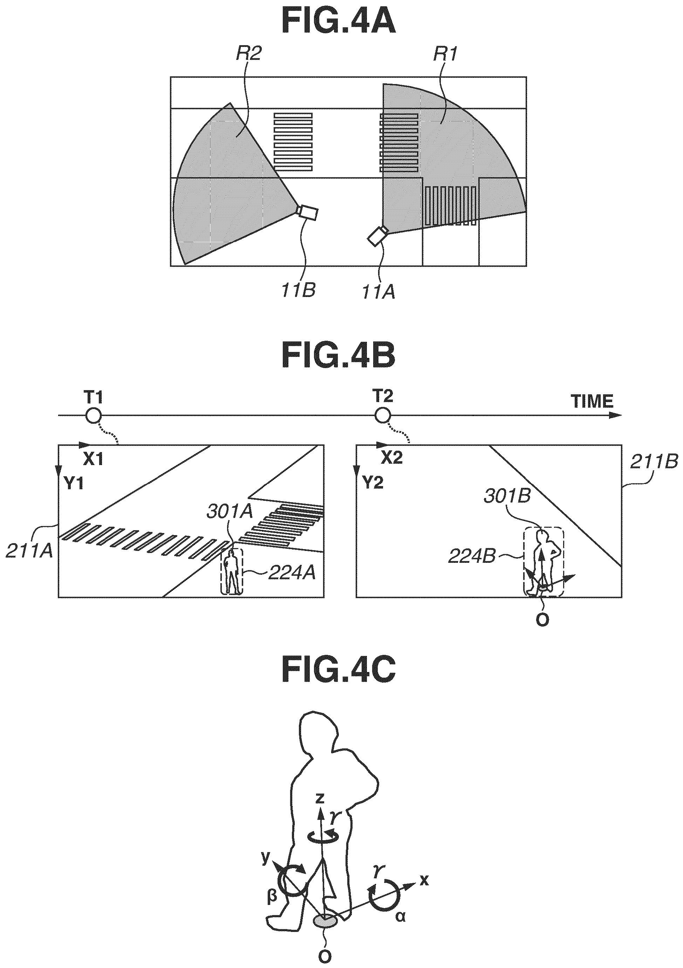

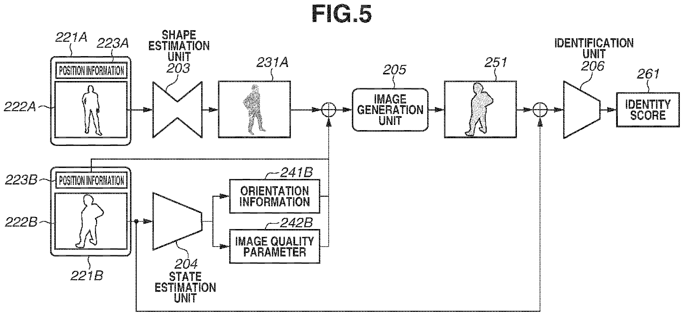

The extraction unit 202 extracts a moving object from the images acquired by the image acquisition unit 201 and generates a moving object extraction result list for each camera acquired from the image acquisition unit 201. The moving object extraction result list is time series data in which moving object extraction results are arranged by the time supplied to each image. The moving object extraction results include visible object detection frame information (center position and size) representing a visible object detection frame 224 (described below in Fig. 4B) including the visible region of the moving object, and moving object images 222 (described below in Fig. 5) representing the moving object images in the visible region. The visible object detection frame information for a moving object represents the position of the moving object within the image.

The shape estimation unit 203 estimates a three-dimensional shape of the relevant moving object based on the moving object extraction result acquired by the extraction unit 202. The three-dimensional shape represents a shape in the three-dimensional Euclidean space having a height, width, and depth. The viewpoint to the three-dimensional shape of the moving object estimated by the shape estimation unit 203 in the three-dimensional Euclidean space can be freely changed. The estimation result of the three-dimensional shape of the moving object includes a color distribution based on the color information for the moving object image included in the moving object extraction result.

The state estimation unit 204 estimates a moving object state of the relevant moving object based on the moving object extraction result acquired by the extraction unit 202. A moving object state estimation result includes orientation information and an image quality parameter of the relevant moving object. The orientation information for the moving object represents the gradient angles around the three axes of the moving object in a three-dimensional space. The image quality parameter represents parameters related to the image quality and texture, and the hue, saturation, and lightness of a moving object image.

The image generation unit 205 generates a predictive image of the relevant moving object based on the moving object extraction result, the estimation result of the three-dimensional shape of the moving object, and the estimation result of the moving object state of the moving object. The image generation unit 205 firstly determines a background image of the moving object based on the visible object detection frame information for the moving object included in the moving object extraction result. Next, the image generation unit 205 changes the viewpoint to the three-dimensional shape of the moving object in the three-dimensional space based on the orientation information for the moving object included in the estimation result of the moving object state of the moving object, and generates a predictive image of the moving object through image conversion processing. The image generation unit 205 further changes the image quality parameter of the generated predictive image of the moving object based on the image quality parameter included in the estimation result of the moving object state of the moving object.

The identification unit 206 compares the moving object image included in the moving object extraction result with the predictive image of the moving object generated by the image generation unit 205, to identify whether the moving objects in the two images are identical. More specifically, the identification unit 206 performs processing for outputting an identity score using feature vectors extracted from the moving object image and the predictive image to determine whether the moving objects in the two images are identical based on the identity score.

The above-described functional configuration of the image processing apparatus 10 according to the present embodiment makes it possible to generate, for any moving object, an image of a new moving object having the orientation and image quality close to those of the extracted moving object at the position where the moving object in the image is extracted. Any moving object may be a pair of moving objects, a first moving object and a second moving object.

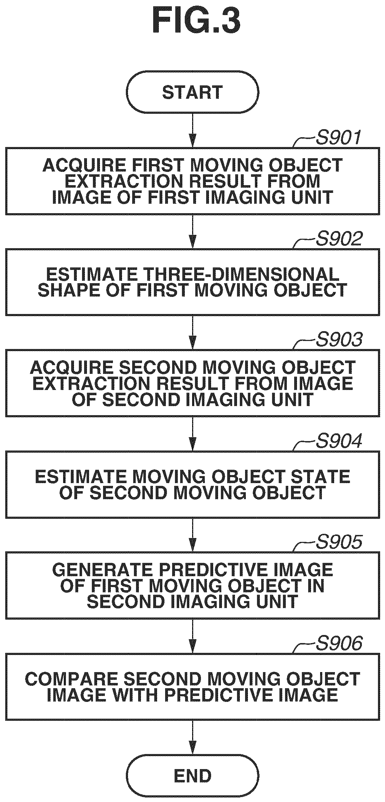

Fig. 3 is a flowchart illustrating processing of the image processing apparatus 10 according to the present embodiment. The processing of the flowchart is executed when the image acquisition unit 201 sequentially acquires images from the cameras 11A to 11C at predetermined time intervals and provides the extraction unit 202 with these images. For ease of explanation, the following description will be made centering on an example case where two cameras are used and the image acquisition unit 201 acquires images from the cameras 11A and 11B. The camera 11A may be referred to as a first imaging unit, and the camera 11B a second imaging unit. The moving object captured by the first imaging unit may be referred to as the first moving object, and the moving object captured by the second imaging unit a second moving object.

In step S901, the image acquisition unit 201 acquires an image captured by the first imaging unit. The extraction unit 202 extracts the first moving object from the acquired image, and acquires a first moving object extraction result as the extraction result. The first moving object extraction result includes the visible object detection frame information for the first moving object and the moving object image of the first moving object (hereinafter referred to as a first moving object image).

In step S902, the shape estimation unit 203 estimates the three-dimensional shape of the first moving object based on the first moving object extraction result acquired in step S901.

After an image is acquired in step S901, the image acquisition unit 201 acquires, in step S903, an image captured by the second imaging unit. The extraction unit 202 extracts the second moving object from the acquired image, and acquires a second moving object extraction result as the extraction result. The second moving object extraction result includes the visible object detection frame information for the second moving object and the moving object image of the second moving object (hereinafter referred to as a second moving object image).

In step S904, the state estimation unit 204 estimates the moving object state of the second moving object (hereinafter referred to as a second moving object state) based on the second moving object extraction result acquired in step S903. An estimation result of the second moving object state includes the orientation information and the image quality parameter of the second moving object.

In step S905, the image generation unit 205 generates a predictive image of the first moving object in the second imaging unit based on the estimation result of the three-dimensional shape of the first moving object in step S902, the second moving object extraction result acquired in step S903, and the estimation result of the second moving object state in step S904. This predictive image is generated based on the background image obtained based on the visible object detection frame information for the second moving object included in the second moving object extraction result, and the foreground image obtained by changing the three-dimensional shape of the first moving object into a state close to the orientation information and the image quality parameter of the second moving object.

As a method for generating a predictive image by the image generation unit 205, a method using a learned image generation model is also applicable. Examples of image generation models include STABLE DIFFUSION and DALL-E. The image generation unit 205 may generate a predictive image by using these image generation models. An image generation model may be included in the image processing apparatus 10 or in an external cloud server. The image generation unit 205 inputs the estimation result of the three-dimensional shape of the first moving object and the estimation result of the second moving object state, into the image generation model inside or outside the image processing apparatus 10. The image generation unit 205 further inputs, as a prompt, an instruction (text data) for generating a predictive image of the first moving object when the first moving object is captured by the second imaging unit, to the image generation model. This enables acquiring a predictive image from the image generation model. In other words, the image generation unit 205 acquires a predictive image when a first subject is captured by the second imaging unit, based on the estimation result of the three-dimensional shape of the first moving object and the estimation result of the second moving object state.

In step S906, the identification unit 206 compares the second moving object image included in the second moving object extraction result acquired in step S903 with the predictive image generated in S905 to determine whether the moving objects in both images are identical. When the identification unit 206 determines that the first and the second moving objects are identical, the identification unit 206 applies information indicating a moving object identical to the first moving object extraction result to the second moving object extraction result. The processing then exits the flowchart.

The processing of this flowchart generates a predictive image by changing the moving object captured by a certain camera, according to the orientation, image quality, appearance of the background of the moving object captured afterward by another camera, and uses the predictive image for the comparison processing with the moving object image. This enables reducing the possibility that the moving object is lost because of the variation in the moving object appearance in tracking the moving object moving from camera to camera.

An example of a target captured image according to the present embodiment will now be described with reference to Figs. 4A to 4C. Fig. 4A illustrates an example where two cameras 11A and 11B are disposed in a predetermined space where a moving object is predicted to be present. Referring to the example in Fig. 4A, the orientations of the cameras 11A and 11B are largely different, and there is no common range between imaging ranges R1 and R2. Such a layout of the imaging units generally makes it difficult to identify a moving object. One reason of the difficulty is that a technique focusing on the spatial continuity cannot be applied because of the spatial discontinuity. Another reason of the difficulty is that visible information for the moving object varies for each imaging unit because the moving object faces the imaging units with different orientations.

Fig. 4B illustrates examples of images captured by the first and the second imaging units according to the present embodiment. The following description will be made on the premise that the first imaging unit is the camera 11A, and the second imaging unit is the camera 11B. The moving object is assumed to be a human body, but is not limited to a human body but may be an animal, such as a dog, or an object, such as an automobile. The drawing on the left-hand side of Fig. 4B illustrates a captured image 211A captured by the camera 11A at time T1. The drawing on the right-hand side of Fig. 4B illustrates a captured image 211B captured by the camera 11B at time T2 later than time T1. A first moving object 301A is extracted from the captured image 211A. The captured image 211A displays a visible object detection frame 224A including the visible region of the first moving object 301A. A second moving object 301B is extracted from the captured image 211B. The captured image 211B displays a visible object detection frame 224B including the visible region of the second moving object 301B. The coordinate system in the captured image 211A is represented by X1 extending in the rightward direction and Y1 extending in the downward direction from the top left position (0, 0) in the image as the origin. Likewise, the coordinate system in the captured image 211B is represented by X2 and Y2 extending from the top left position in the image as the origin. The captured image 211B displays a center O of the three-dimensional coordinate axis related to the orientation of the second moving object 301B. The three-dimensional coordinate axis is used by the state estimation unit 204 to represent the orientation of the second moving object 301B.

Fig. 4C illustrates the three-dimensional coordinate axis related to the orientation of the moving object. The center O of the three-dimensional coordinate axis is positioned at the center of the moving object portion in contact with the ground. There are three coordinate axes (x, y, and z) extending in three different directions from the coordinate axis center O. The y axis is the axis of the direction defined as the front face of the moving object. The x axis perpendicularly intersecting with the y axis is another axis that defines the ground. The Z axis vertically extends from the ground. The rotational angles around the x, y, and z axes are represented by α, β, and γ, respectively.

Fig. 5 illustrates a data flow of the image processing apparatus 10 according to the present embodiment.

The data acquired from the captured image 211A by the first imaging unit will now be described. A first moving object extraction result 221A extracted from the captured image 211A includes a first moving object image 222A and visible object detection frame information 223A for the first moving object. The clipping range of the first moving object image may have any ratio to the size of the moving object. The clipping range may or may not include the outside of the captured image 211A. If the clipping range includes the outside, any property may be used. Hereinafter, the visible object detection frame information 223A for the first moving object is referred to as first position information 223A.

The shape estimation unit 203 estimates a three-dimensional shape 231A of the first moving object based on the first moving object image 222A. When estimating the three-dimensional shape of the first moving object, the shape estimation unit 203 generates the color distribution and position information for the visible surface of the first moving object image 222A based on the relevant color information and geometry information. The color information for the invisible surface may be subjected to any processing. The three-dimensional shape 231A of the first moving object is such data that represents the surface of the first moving object as positions in the three-dimensional Euclidean space. The relevant data type may be either point group data or mesh data. The reference point of the three-dimensional shape 231A of the first moving object may be the center of the moving object portion in contact with the ground, but may be other positions. The three-dimensional shape 231A of the first moving object may include information about objects (e.g., bag, umbrella) accompanying the first moving object appearing in the first moving object image 222A.

The data acquired from the captured image 211B by the second imaging unit will now be described. A second moving object extraction result 221B extracted from the captured image 211B includes a second moving object image 222B and visible object detection frame information 223B for the second moving object. The clipping range of the second moving object image 222B may have any ratio to the size of the moving object. The clipping range may or may not include the outside of the captured image 211B. If the clipping range includes the outside, any property may be used. Hereinafter, the visible object detection frame information 223B for the second moving object is referred to as second position information 223B.

The state estimation unit 204 estimates orientation information 241B and an image quality parameter 242B of the second moving object based on the second moving object image 222B. When acquiring the image quality parameter 242B, the clipping range of the second moving object image 222B may be changed. The image quality parameter 242B includes any parameters related to the hue, saturation, lightness, image quality, and texture. The image quality parameter 242B includes examples of image quality parameters. The processing for estimating the image quality parameter 242B may be processing for acquiring a set of image quality parameters by dividing the region of the second moving object image 222B. The relevant processing is not particularly limited as long as the processing inputs an image and outputs image quality parameters. The state estimation unit 204 may estimate the orientation information 241B and the image quality parameter 242B of the second moving object by using the camera setting, installation position, and lighting condition of the second imaging unit.

The image generation unit 205 generates a predictive image 251 of the first moving object in the second imaging unit based on the three-dimensional shape 231A of the first moving object, the second position information 223B, the orientation information 241B and the image quality parameter 242B of the second moving object. Examples of methods used by the image generation unit 205 to acquire the background image in the second imaging unit by using the second position information 223B include a method of using the background captured image of the second imaging unit pre-stored in the ROM 103. However, other methods are also applicable. When determining the viewpoint for subjecting the three-dimensional shape 231A of the first moving object to image conversion, based on the orientation information 241B for the second moving object, the image generation unit 205 determines the scale of the three-dimensional shape 231A of the first moving object. Examples of the methods for determining the viewpoint include a method for referencing the region size of the second position information 223B. However, other methods are also applicable. Ray tracing is an example of a method used by the image generation unit 205 to subject the three-dimensional shape 231A of the first moving object to image conversion. However, other methods are also applicable.

The above-described procedures illustrated in Fig. 5 generate the predictive image 251 that reflects the position, background, orientation of the moving object, and image quality parameters in the second moving object image 222B, based on the first moving object image 222A. Thus, if the first and the second moving objects are an identical moving object, the second moving object image 222B and the predictive image 251 are a substantially identical image.

The identification unit 206 performs processing for outputting an identity score 261 between the second moving object image 222B and the predictive image 251. The identification unit 206 determines whether the first and the second moving objects are an identical moving object based on the identity score 261.

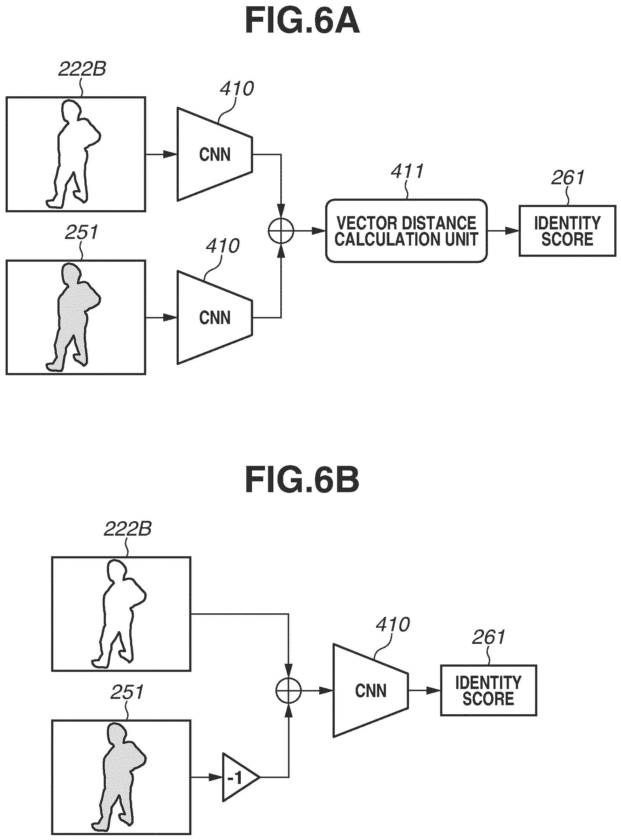

Figs. 6A and 6B illustrate processing of the identification unit 206 according to the present embodiment. Fig. 6A illustrates an example of processing of outputting the identity score 261 between the second moving object image 222B and the predictive image 251. In the processing illustrated in Fig. 6A, the identification unit 206 first inputs each image to a Convolutional Neural Network (CNN).

This CNN is an example of a network model for extracting a feature vector of an image. A CNN 410 to which the second moving object image 222B is input and a CNN 410 to which the predictive image 251 is input are configured with an identical network model. The input images are then converted into feature vectors by the CNN 410. Subsequently, a vector distance calculation unit 411 calculates the distance between feature vectors based on each image, converts the calculated vector distance into the identity score 261, and outputs the identity score 261.

Fig. 6B illustrates another example of processing for outputting the identity score 261 between the second moving object image 222B and the predictive image 251. In the processing illustrated in Fig. 6B, the identification unit 206 subtracts the predictive image 251 from the second moving object image 222B. The subtraction processing between images is performed based on a luminance information or red, green, and blue (RGB) information. For example, since the background images of the predictive image 251 and the second moving object image 222B are substantially identical, the RGB information for the background portion is approximated to 0 in the subtraction processing, and only the result of the subtraction processing of the foreground portion (moving object portion) remains. If the predictive image 251 is approximated to be substantially identical to the second moving object image 222B, the RGB information for the subtraction result of the moving object portion can be approximated to 0. The identification unit 206 inputs the image after the subtraction to the CNN 410, converts the output result into the identity score 261, and outputs the identity score 261. The present embodiment uses a CNN for the processing for generating image vectors and processing for calculating the identity score 261 between images, the identity between images may be evaluated without using a CNN.

The above-described present embodiment can improve the robustness against the variation in the moving object appearance which may occur between different cameras when identifying an identical moving object captured by different cameras.

A second embodiment will now be described centering on a method for estimating a joint position of a moving object and generating a predictive image of the moving object by using an estimation result of the joint position of the moving object. Descriptions of elements similar to those according to the first embodiment will be omitted, and descriptions will be made centering on differences from the first embodiment.

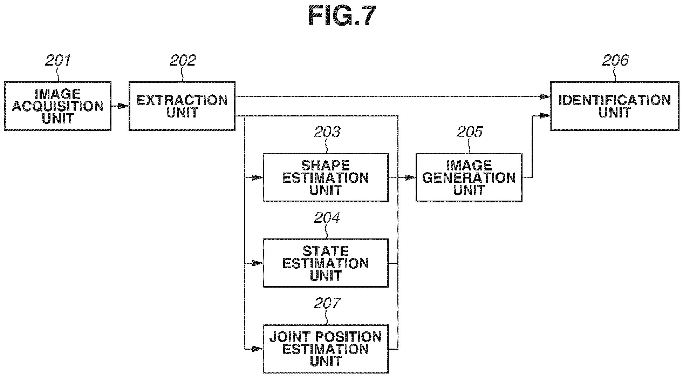

Fig. 7 is a block diagram illustrating a functional configuration of the image processing apparatus 10 according to the present embodiment. The image processing apparatus 10 in Fig. 7 differs from the image processing apparatus 10 in Fig. 2 in that a joint position estimation unit 207 is provided.

The joint position estimation unit 207 estimates joint position information for the relevant moving object based on a moving object extraction result acquired by the extraction unit 202.

The image generation unit 205 changes the joint position of the three-dimensional shape of the moving object based on the joint position information for the moving object estimated by the joint position estimation unit 207, and generates a predictive image of the moving object through image conversion processing.

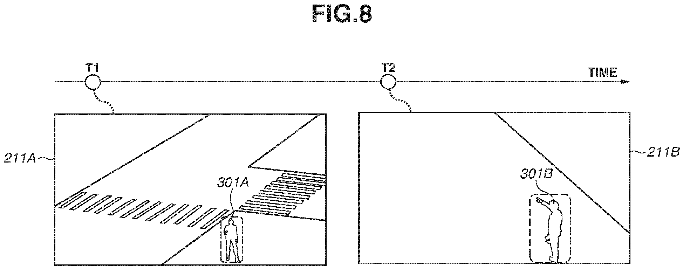

An example of a target captured image according to the present embodiment will now be described with reference to Fig. 8. The spatial arrangement of the imaging units is similar to that in Fig. 4A. The drawing on the left-hand side of Fig. 8 indicates the captured image 211A by the camera 11A at time T1. The drawing on the right-hand side of Fig. 8 indicates the captured image 211B by the camera 11B at time T2 later than time T1. Fig. 8 illustrates a case where the joint position of the first moving object 301A extracted from the captured image 211A is different from the joint position of the second moving object 301B extracted from the captured image 211B.

As illustrated in Fig. 8, in a case where the joint position of the moving object changes, a different color distribution at the periphery of the moving object may possibly degrade the identification accuracy of the moving object. Thus, the present embodiment generates a predictive image that reflects the change of the joint position.

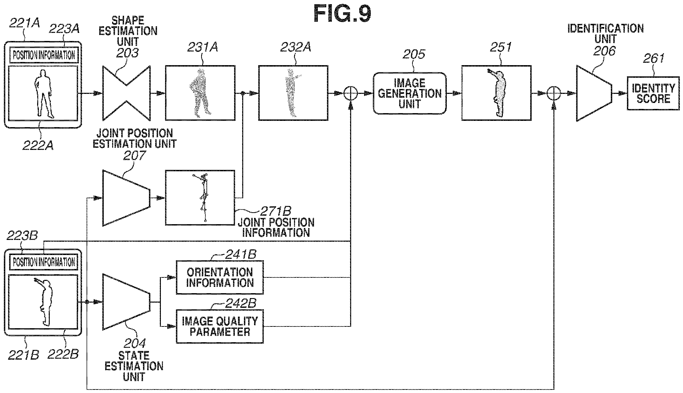

Fig. 9 illustrates a data flow of the image processing apparatus 10 according to the present embodiment. Descriptions will be made centering on differences from the data flow in Fig. 5.

The joint position estimation unit 207 estimates joint position information 271B for the second moving object based on the second moving object image 222B. The joint position information 271B includes, for example, the positions and relevant estimated likelihoods for 17 different joints of the human body in the three-dimensional space. However, any desired portion can be defined as a joint point as long as it is based on a moving object portion. The number of joints is not limited to 17.

The three-dimensional shape 231A of the first moving object is converted into the three-dimensional shape 232A of the first moving object with the changed joint position through processing for changing the position of each joint portion in the three-dimensional space based on the joint position information 271B for the second moving object.

The image generation unit 205 generates the predictive image 251 of the first moving object in the second imaging unit based on the three-dimensional shape 232A of the first moving object with the changed joint position, the second position information 223B, and the orientation information 241B and the image quality parameter 242B of the second moving object.

The above-described procedures illustrated in Fig. 9 generates a predictive image 251 that reflects the position, background, and the joint position, orientation, and image quality parameter of the moving object similar to those in the second moving object image 222B, based on the first moving object image 222A. If the first and the second moving objects are an identical moving object, the second moving object image 222B and the predictive image 251 will be a substantially identical image.

The above-described present embodiment can improve the robustness against the variation in the moving object joint position which may occur between different cameras when identifying an identical moving object captured by different cameras.

A third embodiment will now be described centering on a method for detecting an occluded area of a moving object and generating a predictive image of the moving object by using the detection result of the occluded area. Descriptions of elements similar to those according to the second embodiment will be omitted, and descriptions will be made centering on differences from the first embodiment.

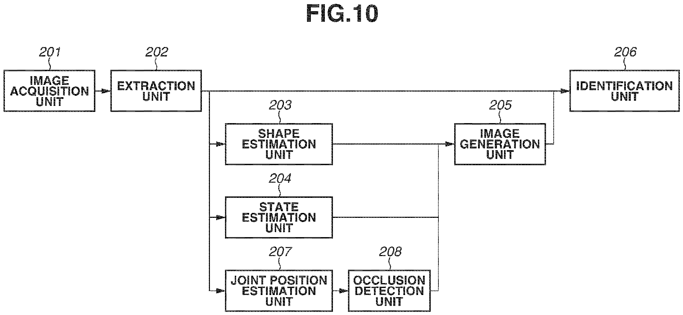

Fig. 10 is a block diagram illustrating a functional configuration of the image processing apparatus 10 according to the present embodiment. The image processing apparatus 10 in Fig. 10 differs from the image processing apparatus 10 in Fig. 7 in that an occlusion detection unit 208 is provided.

The occlusion detection unit 208 detects the occluded area in the moving object image based on the joint position information for the moving object estimated by the joint position estimation unit 207.

The image generation unit 205 changes the joint position of the three-dimensional shape of the moving object based on the joint position information for the moving object estimated by the joint position estimation unit 207, and generates a predictive image of the moving object through image conversion processing. According to the present embodiment, the image generation unit 205 performs processing for excluding a partial region of the predictive image from one or more targets of the comparison by the identification unit 206, based on the detection result of the occluded area.

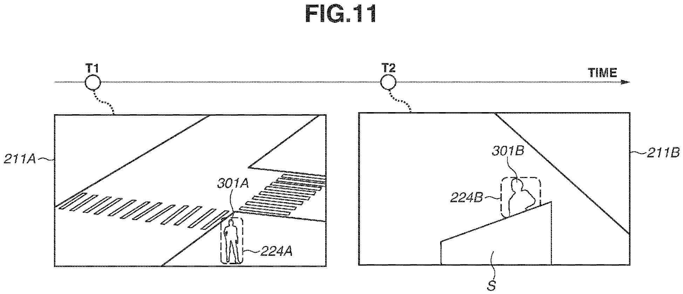

An example of a target captured image according to the present embodiment will now be described with reference to Fig. 11. The spatial arrangement of the imaging units is similar to that in Fig. 4A. The drawing on the left-hand side of Fig. 11 indicates the captured image 211A by the camera 11A at time T1. The drawing on the right-hand side of Fig. 11 indicates the captured image 211B by the camera 11B at time T2 later than time T1. The first moving object 301A extracted from the captured image 211A is not occluded while the lower half region of the second moving object 301B extracted from the captured image 211B is occluded by an occluding object S. Fig. 11 illustrates a case where the occlusion state of the first moving object image in the captured image 211A is different from the occlusion state of the second moving object image in the captured image 211B.

As illustrated in Fig. 11, in a case where the occlusion state of the moving object changes, different geometry features of the moving object in the visible object detection frames 224A and 224B of the moving object may possibly degrade the identification accuracy of the moving object. The present embodiment therefore generates a predictive image that reflects the occlusion state.

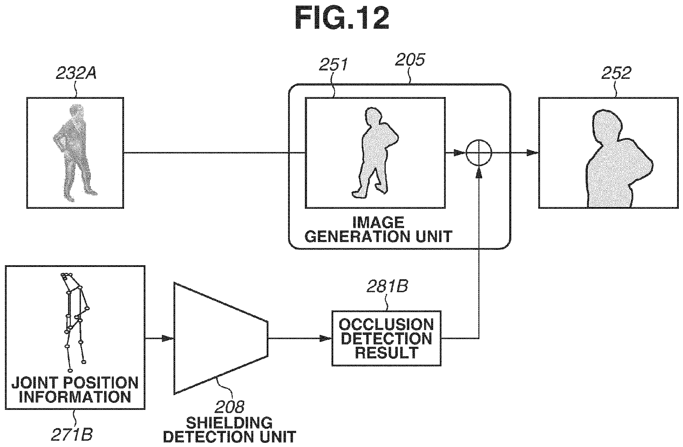

Fig. 12 illustrates a data flow of the image processing apparatus 10 according to the present embodiment.

The occlusion detection unit 208 detects the occluded area of the second moving object based on the joint position information 271B for the second moving object. The present embodiment uses the region other than the occluded area indicated by the occlusion detection result 281B for the comparison with the second moving object image. Specific examples of processing of the occlusion detection unit 208 include rule-based processing for determining that the lower half region is occluded in a case of a low estimated likelihood of the joint belonging to the lower half region out of the joint position information 271B for the second moving object. Other specific examples include rule-based processing for determining that the lower half region is occluded if the position of the joint belonging to the lower half region is substantially identical to or lower than the bottom side of the detection frame in the second position information 223B out of the joint position information 271B for the second moving object. The processing of the occlusion detection unit 208 is not limited to the above-described specific examples as long as the processing detects the occluded area based on the joint position information and the moving object extraction result of the moving object.

The image generation unit 205 generates the predictive image 251 of the first moving object in the second imaging unit based on the three-dimensional shape 232A of the first moving object, and the second position information 223B, the orientation information 241B, and the image quality parameter 242B of the second moving object that are illustrated in Fig. 9. According to the present embodiment, the image generation unit 205 acquires the predictive image 252 by excluding the occluded area indicated by the occlusion detection result 281B of the second moving object from the generated predictive image 251. The processing performed by the image generation unit 205 to acquire a predictive image based on the occlusion detection result 281B is not limited as long as the processing enlarges a partial region of the predictive image or moves the region of the predictive image so as not to include the occluding object S.

The above-described procedures illustrated in Fig. 12 generates a predictive image that reflects the position, background, and the joint position, orientation, image quality parameter, and occluded area of the moving object similar to those in the second moving object image 222B, based on the first moving object image 222A. If the first and the second moving objects are an identical moving object, the second moving object image 222B and the predictive image 252 are therefore a substantially identical image.

The present embodiment described above can improve the robustness against the variation in the occluded area which may occur between different cameras when identifying an identical moving object captured by different cameras.

A fourth embodiment will now be described centering on a method for generating at least one predictive image on the assumption that a first moving object is captured by the first imaging unit and then captured by the second imaging unit, and comparing the generated predictive image with a second moving object image captured by the second imaging unit. Descriptions of elements similar to those according to the first embodiment will be omitted, and descriptions will be made centering on differences from the first embodiment.

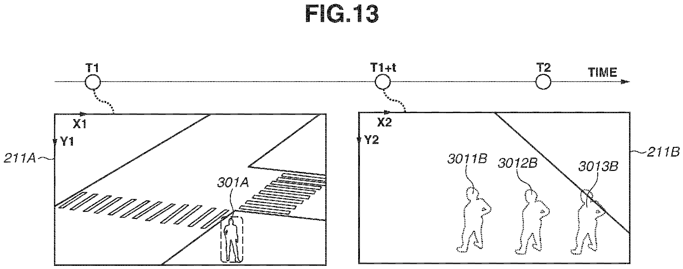

An example of a target captured image according to the present embodiment will now be described with reference to Fig. 13. The spatial arrangement of the imaging units is similar to that in Fig. 4A. The drawing on the left-hand side of Fig. 13 indicates the captured image 211A by the camera 11A at time T1. The first moving object 301A is extracted from the captured image 211A. The drawing on the right-hand side of Fig. 13 illustrates, with broken lines, the predictive images 3011B, 3012B, and 3013B of the first moving object in the captured image 211B by the camera 11B at time T1+t later than time T1.

Unlike the first to the third embodiments, the image generation unit 205 according to the present embodiment generates a predictive image on the assumption that the first moving object is captured by the second imaging unit as soon as the first moving object is extracted from the image captured by the first imaging unit, without waiting for the second moving object to be captured by the second imaging unit.

The present embodiment performs processing for generating a predictive image before the second moving object is extracted. The state estimation unit 204 according to the present embodiment therefore estimates the first moving object state in the second imaging unit without using the second moving object extraction result.

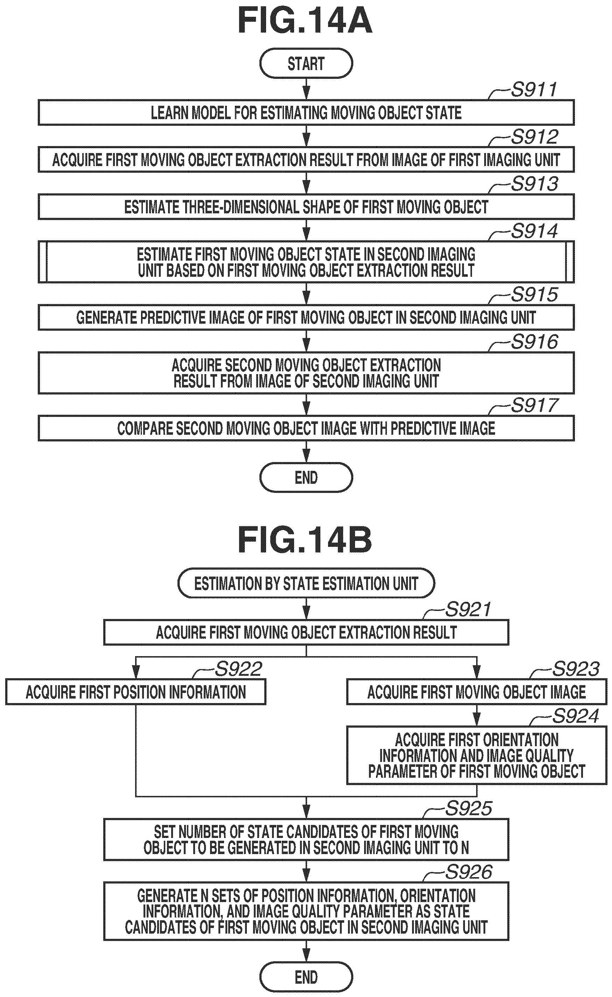

Fig. 14A is a flowchart illustrating processing of the image processing apparatus 10 according to the present embodiment.

In step S911, the state estimation unit 204 learns a model for estimating the moving object state by using learning data stored in a storage unit, such as the mass-storage device 104. The relevant learning data includes, for example, a set of the moving object state in the first imaging unit and the moving object state in the second imaging unit when the moving object captured by the first imaging unit is captured by the second imaging unit. In the learning, a Deep Neural Network (DNN) model is used. The state estimation unit 204 stores, in a storage unit, a learned model having been learned through the learning data. The processing of this step may be performed in advance independently of this flowchart.

In step S912, the image acquisition unit 201 acquires the image captured by the first imaging unit.

The extraction unit 202 then extracts the first moving object from the acquired image and acquires the first moving object extraction result serving as the extraction result.

In step S913, the shape estimation unit 203 estimates the three-dimensional shape of the first moving object based on the first moving object extraction result acquired in step S912.

In step S914, the state estimation unit 204 estimates the state (e.g., position and orientation) of the first moving object in the second imaging unit based on the first moving object extraction result acquired in step S912. The estimation processing performed in this step will be described in detail with reference to the flowchart in Fig. 14B.

In step S915, the image generation unit 205 generates a predictive image of the first moving object in the second imaging unit based on the estimation result of the three-dimensional shape of the first moving object in step S913 and the estimation result of the moving object state in step S914. According to the present embodiment, the estimation result of the moving object state in step S914 includes a plurality of candidates. Thus, a plurality of predictive images of the first moving object in the second imaging unit is generated according to the number of candidates (e.g., n).

After an image is acquired in step S912, the image acquisition unit 201 acquires, in step S916, the image captured by the second imaging unit. The extraction unit 202 then extracts the second moving object from the acquired image and acquires the second moving object extraction result serving as the relevant extraction result.

In step S917, the identification unit 206 compares the plurality of predictive images generated in S915 with the second moving object image included in the second moving object extraction result acquired in step S916 to determine whether there exists a predictive image including the moving object identical to the second moving object image. The processing then exits this flowchart.

The processing of this flowchart estimates the state (e.g., position and orientation) of the moving object to be captured afterward by another camera, based on the extraction result of the moving object pre-captured by a certain camera, generates a predictive image that reflects the result of the relevant estimation, and uses the predictive image for the comparison with the moving object image. This enables reducing the possibility that the moving object is lost because of the variation in the moving object appearance in tracking the moving object moving from camera to camera.

Fig. 14B is a flowchart illustrating details of the estimation processing performed in step S914 in Fig. 14A.

In step S921, the state estimation unit 204 acquires the first moving object extraction result acquired in step S912.

In step S922, the state estimation unit 204 acquires the first position information included in the first moving object extraction result acquired in step S921.

In step S923, the state estimation unit 204 acquires the first moving object image included in the first moving object extraction result acquired in step S921.

In step S924, the state estimation unit 204 acquires the orientation information and the image quality parameter of the first moving object from the first moving object image acquired in step S923.

In step S925, the state estimation unit 204 sets the number of state candidates of the first moving object in the second imaging unit to n.

In step S926, the state estimation unit 204 generates n sets of the position information, orientation information, and image quality parameter as state candidates of the first moving object in the second imaging unit. According to the present embodiment, the state estimation unit 204 estimates the first moving object state in the second imaging unit by inputting information about the first moving object state acquired in steps S922 and S924 to the model having been learned in step S911. The processing then proceeds to step S915.

The number n of state candidates of the first moving object in the second imaging unit may be 1 or a positive integer larger than 1. According to the present embodiment, the image generation unit 205 generates a predictive image when the first moving object is captured by the second imaging unit before the second moving object is captured by the second imaging unit, and evaluates the identity score 261 between the second moving object image captured by the second imaging unit and the generated predictive image. Thus, a certain degree of uncertainty may be permitted. The image generation unit 205 may generate a plurality of predictive images of the first moving object in the second imaging unit in consideration of the robustness against uncertainty. For this reason, the number n of state candidates of the first moving object in the second imaging unit to be generated is set to an integer larger than 1.

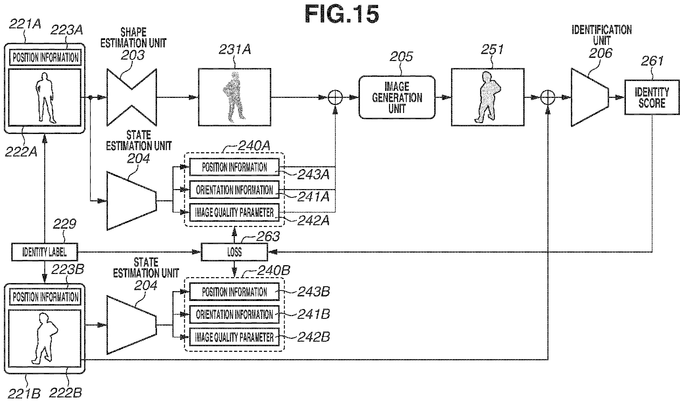

Fig. 15 illustrates a data flow of the image processing apparatus 10 according to the present embodiment. Descriptions will be made centering on differences from the data flow in Fig. 5.

The state estimation unit 204 in the upper stage outputs state information 240A (e.g., position information 243A, orientation information 241A, and an image quality parameter 242A) of the first moving object in the second imaging unit from the first moving object extraction result 221A.

The image generation unit 205 generates the predictive image 251 of the first moving object in the second imaging unit based on the three-dimensional shape 231A of the first moving object and the state information 240A for the first moving object.

The identification unit 206 performs processing for outputting the identity score 261 between the second moving object image 222B and the predictive image 251. The first moving object extraction result 221A and the second moving object extraction result 221B are assigned an identity label 229 that indicates whether these results are brought about by an identical moving object.

The state estimation unit 204 in the lower stage performs, similarly to the state estimation unit 204 in the upper stage, steps S921 to S924 and outputs state information 240B (e.g., position information 243B, the orientation information 241B, and the image quality parameter 242B) for the second moving object from the second moving object extraction result 221B.

Since the second moving object image 222B and the second position information 223B are used as correct answer data, the position information 243B succeeds the second position information 223B.

A loss 263 is calculated by inputting, to a loss function, the difference between the identity label 229 and the identity score 261 and the difference between the state information 240A for the first moving object and the state information 240B for the second moving object. The state estimation unit 204 can improve the estimation accuracy by proceeding with the learning of the model for estimating the moving object state by using the loss 263.

The present embodiment described above generates a predictive image of the moving object to be captured afterward by another camera, based on the moving object image captured by a certain camera, and compares the relevant predictive image with the actually captured moving object image, to identify an identical moving object.

A fifth embodiment will now be described centering on a method for generating at least one predictive image of a moving object on the assumption that a first moving object is captured by the first imaging unit and then captured by the second imaging unit and in consideration of the variation in join position of the moving object. Descriptions of elements similar to those according to the second and the fourth embodiments will be omitted, and descriptions will be made centering on differences from the second and the fourth embodiments.

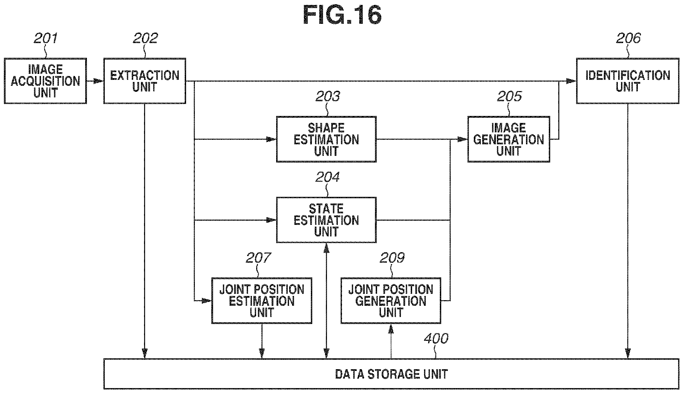

Fig. 16 is a block diagram illustrating a functional configuration of the image processing apparatus 10 according to the present embodiment. The image processing apparatus 10 in Fig. 16 differs from the image processing apparatus 10 in Fig. 7 in that a joint position generation unit 209 and a data storage unit 400 are provided.

The data storage unit 400 stores the moving object extraction result of the extraction unit 202, the moving object state estimated by the state estimation unit 204, the joint position information estimated by the joint position estimation unit 207, and the identity score 261 output by the identification unit 206, in association with the moving object extraction result. The mass-storage device 104 is used as the data storage unit 400.

The joint position generation unit 209 generates predictive joint position information based on a result of the learning performed by using the joint position information stored in the data storage unit 400. The joint position generation unit 209 is an example of a joint position prediction means. Data to be used for the learning includes various data based on the moving object extraction result in a predetermined imaging unit. The joint position generation unit 209 performs a wide range of learning about the joint position information that can be taken by the moving object captured by the predetermined imaging unit.

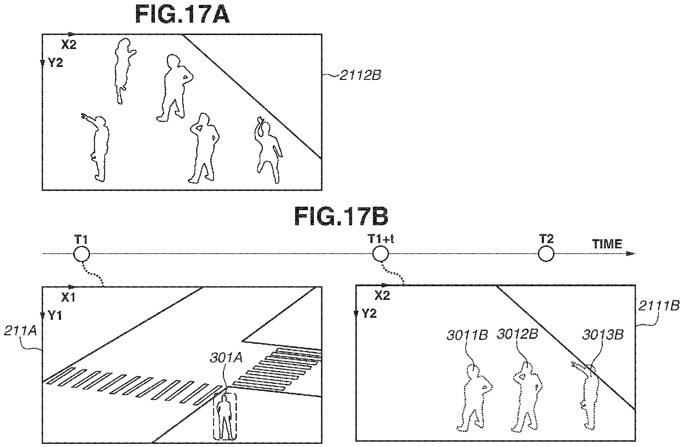

An example of a target captured image according to the present embodiment will now be described with reference to Figs. 17A and 17B. The spatial arrangement of the imaging units is similar to that in Fig. 4A.

Fig. 17A illustrates a captured image 2112B captured by the second imaging unit. The captured image 2112B includes a plurality of different moving objects. Each of the moving objects in the captured image 2112B have different pieces of joint position information. The data storage unit 400 acquires and stores the joint position information for all of these moving objects. This enables generating a wide variety of the joint position information.

The drawing on the left-hand side of Fig. 17B illustrates the captured image 211A generated by the camera 11A at time T1.

The first moving object 301A is extracted from the captured image 211A. The drawing on the right-hand side of Fig. 17B illustrates with broken lines the predictive images 3011B, 3012B, and 3013B of the first moving object in the captured image 211B generated by the camera 11B at time T1+t later than time T1.

The joint position generation unit 209 generates at least one candidate of the predictive joint position information by using the joint position information stored in the data storage unit 400. The joint position generation unit 209 changes the position of each joint portion of the three-dimensional shape of the first moving object in the three-dimensional space based on the generated predictive joint position information to generate a three-dimensional shape of the first moving object with the changed position of each joint. The image generation unit 205 generates one or more predictive images (3011B, 3012B, and 3013B) of the first moving object in the second imaging unit based on one or more three-dimensional shapes of the first moving object generated in such a way and one or more state candidates of the first moving object.

The above-described present embodiment can improve the robustness against the variation in the moving object joint position which may occur between different cameras when identifying an identical moving object captured by different cameras.

A sixth embodiment will now be described centering on a method for estimating a likelihood distribution together in estimating a three-dimensional shape of a moving object based on a moving object image, and using the likelihood distribution in determining the identity of moving objects. Descriptions of elements similar to those according to the first embodiment will be omitted, and descriptions will be made centering on differences from the first embodiment.

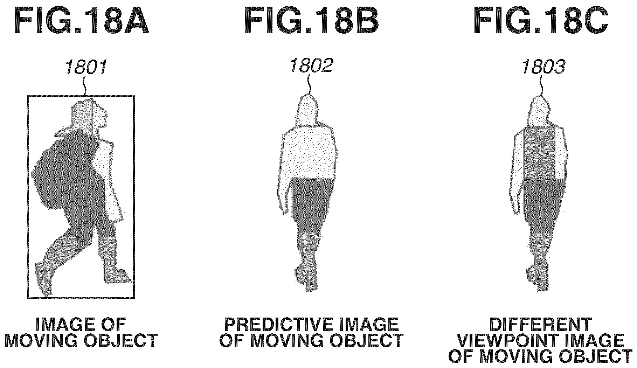

Figs. 18A to 18C illustrate examples of captured images according to the present embodiment.

Fig. 18A illustrates an image 1801 of a moving object when viewed from substantially the right rear. The moving object carrying a large baggage on the back surface, and the sleeve of the jacket of the moving object has comparatively high lightness. Fig. 18B illustrates a predictive image 1802 of the moving object generated by estimating a three-dimensional shape based on the image 1801 in Fig. 18A and viewing the three-dimensional shape from the front side. If the state estimation unit 204 has learned that, for the image 1801 of the moving object, the front side of the jacket of the moving object also has the same color as the sleeve color of the jacket, an image like the predictive image 1802 can be acquired. Fig. 18C illustrates a different viewpoint image 1803 of the moving object. As illustrated in Fig. 18C, since the hem of the jacket of the moving object is the hem of a front open object such as a cardigan, the color information for the object wore inside the front open object may become dominant in the upper half part of the moving object when viewed from the front side.

In the above-described case, there may arise a difference in the image information between the predictive image 1802 acquired from the three-dimensional shape estimated based on the image 1801 of the moving object and the different viewpoint image 1803 of the moving object, possibly degrading the identification accuracy between the predictive image and the moving object image. The present embodiment, therefore, generates a predictive image by excluding invisible portions (e.g., the front and the left surfaces of the moving object) from the image 1801 of the moving object. The improvement of the identification accuracy between the predictive image and the moving object image can thereby be expected.

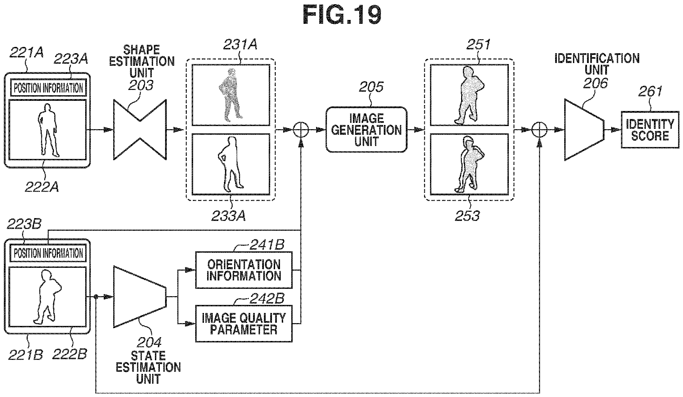

Fig. 19 illustrates a data flow of the image processing apparatus 10 according to the present embodiment. Descriptions will be made centering on differences from the data flow in Fig. 5.

When estimating the three-dimensional shape 231A of the relevant moving object based on the first moving object extraction result 221A extracted by the extraction unit 202, the shape estimation unit 203 also estimates a three-dimensional likelihood distribution 233A at the same time. Referring to the three-dimensional likelihood distribution 233A in Fig. 19, a surface with high likelihood is bright and a surface with low likelihood is dark.

When generating the predictive image 251 of the first moving object based on the three-dimensional shape 231A of the first moving object and the moving object state of the second moving object, the image generation unit 205 also generates a moving object likelihood distribution 253 at the same time. More specifically, when performing image conversion by changing the viewpoint to the three-dimensional shape 231A of the moving object based on the orientation information 241B for the second moving object, the image generation unit 205 changes the viewpoint to the three-dimensional likelihood distribution 233A and projects images as an in-plane likelihood distribution.

The identification unit 206 performs processing for outputting the identity score 261 between the second moving object image 222B and the predictive image 251 by using the moving object likelihood distribution 253. The identification unit 206 may use the moving object likelihood distribution 253 in the preprocessing for the predictive image 251 or combine the moving object likelihood distribution 253 with the predictive image 251 to drive a vector. The use of the moving object likelihood distribution 253 is not limited thereto but may be in any desired way. The identification unit 206 may further perform processing for adding a dummy likelihood distribution to the second moving object image 222B.

According to the present embodiment, by applying the estimated likelihood of the three-dimensional shape to the uncertainty resulting from the difference in the orientation relative to the moving object by using different cameras, information about target image portion information when identifying an identical moving object can be added to guarantee the robustness.

A seventh embodiment will now be described centering on a method for generating a predictive image based on the first moving object image and the second moving object state without estimating a three-dimensional shape of a moving object. Descriptions of elements similar to those according to the first embodiment will be omitted, and descriptions will be made centering on differences from the first embodiment.

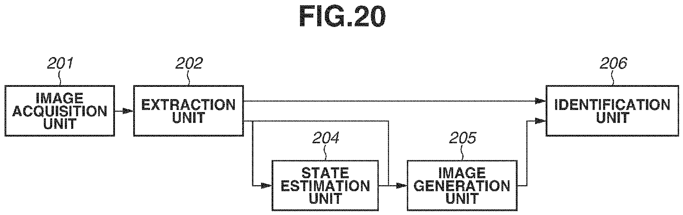

Fig. 20 is a block diagram illustrating a functional configuration of the image processing apparatus 10 according to the present embodiment. The image processing apparatus 10 in Fig. 20 differs from the image processing apparatus 10 in Fig. 2 in that the shape estimation unit 203 is not provided.

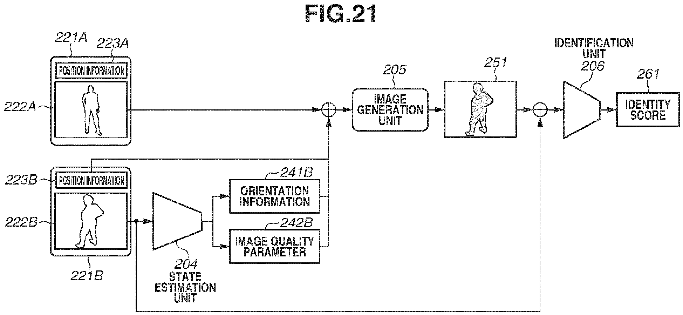

Fig. 21 illustrates a data flow of the image processing apparatus 10 according to the present embodiment. Descriptions will be made centering on differences from the data flow in Fig. 5.

Based on the first moving object image 222A and the orientation information 241B and the image quality parameter 242B of the second moving object, the image generation unit 205 generates the predictive image 251 as if the first moving object is viewed under the condition of the orientation and the image quality parameter of the second moving object. To generate a predictive image having an orientation different from that of the first moving object image 222A, the image generation unit 205 uses, for example, a learned network model having the structure of Generative Adversarial Networks (GAN). The use of GAN enables generating a predictive image with only the orientation and image quality parameter changed while maintaining the appearance feature of the first moving object image 222A. Diverse variations are considered for the combination of the gradient angles around the three axes as the orientation of the second moving object in the three-dimensional space. This makes it difficult to prepare learning data that covers all of the variations in the real space. Thus, GAN learning utilizing computer graphics (CG) data is considered. In GAN learning, CG moving object models identical to or different from the first and the second moving object images are prepared. Changing camera parameters in the CG space enables generating a learning data set of moving objects having different orientations (gradient angles around the three axes in the CG space).

Like the first embodiment, the present embodiment, when identifying an identical moving object captured by different cameras, enables improving the robustness against the variation in the moving object appearance which may occur between different cameras.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An image processing apparatus (10) comprising:
a first extraction means (202) for extracting a first subject image from a first image captured by a first imaging unit (11A-11C);
a second extraction means (202) for extracting a second subject image from a second image captured by a second imaging unit (11A-11C);
a first estimation means (203) for estimating a three-dimensional shape of the first subject based on the first subject image extracted by the first extraction means;
a second estimation means (204) for estimating a second subject state based on the second subject image extracted by the second extraction means;
an acquisition means (205) for acquiring a predictive image predicted to be acquired when the first subject is captured by the second imaging unit (11A-11C), based on an estimation result of the three-dimensional shape of the first subject and an estimation result of the second subject state; and
a determination means (206) for determining whether the first subject and the second subject are an identical subject by comparing the predictive image with the second subject image extracted by the second extraction means (202).

2. The image processing apparatus (10) according to claim 1, wherein the estimation result of the second subject state includes orientation information for the second subject and image quality parameter information for the second subject.

3. The image processing apparatus (10) according to claim 1 or 2,
wherein the estimation result of the second subject state includes the orientation information for the second subject, and
wherein the acquisition means (205) acquires a background image of the predictive image based on a position of the second subject in the second image, and acquires a foreground image of the predictive image by changing a viewpoint to the three-dimensional shape of the first subject based on the orientation information for the second subject.

4. The image processing apparatus (10) according to any one of claims 1 to 3,
wherein the estimation result of the second subject state includes the image quality parameter information for the second subject, and
wherein the acquisition means (205) changes the predictive image based on the image quality parameter of the second subject.

5. The image processing apparatus (10) according to any one of claims 1 to 4, wherein the estimation result of the three-dimensional shape of the first subject includes information about a position and a color of the first subject in a three-dimensional space.

6. The image processing apparatus (10) according to any one of claims 1 to 5, wherein the determination means (206) determines whether the first subject and the second subject are an identical subject based on a distance between feature vectors acquired by inputting the predictive image and the second subject image to a network model.

7. The image processing apparatus (10) according to any one of claims 1 to 6, wherein the determination means (206) determines whether the first subject and the second subject are an identical subject based on an output result acquired by inputting a difference between the predictive image and the second subject image to a network model.

8. The image processing apparatus (10) according to any one of claims 1 to 7, wherein an imaging range of the first imaging unit (11A-11c) does not overlap with an imaging range of the second imaging unit (11A-11C).

9. The image processing apparatus (10) according to any one of claims 1 to 8, further comprising a joint position estimation means (207) for estimating a joint position of the second subject based on the second subject image extracted by the second extraction means (202), wherein the acquisition means (205) acquires the predictive image by changing a joint position of the three-dimensional shape of the first subject based on an estimation result of the joint position of the second subject.

10. The image processing apparatus (10) according to any one of claims 1 to 9, further comprising a detection means (208) for detecting an occluded area for occluding the second subject in the second image, wherein the acquisition means (205) excludes a region corresponding to the occluded area in the predictive image from one or more targets of comparison between the predictive image and the second subject image.

11. The image processing apparatus (10) according to claim 10, further comprising a joint position estimation means (207) for estimating the joint position of the second subject and a likelihood of the joint position based on the second subject image extracted by the second extraction means, wherein the detection means (208) determines the occluded region based on an estimation result of the joint position likelihood of the second subject.

12. The image processing apparatus (10) according to any one of claims 1 to 11,
wherein the estimation result of the three-dimensional shape of the first subject includes information about a likelihood distribution of the three-dimensional shape of the first subject, and
wherein the determination means (206) uses the likelihood distribution of the three-dimensional shape of the first subject in a case of comparing the predictive image with the second moving object image.

13. An image processing method comprising:
extracting (S901), as a first extraction, a first subject image from a first image captured by a first imaging unit (11A-11C);
extracting (S903), as a second extraction, a second subject image from a second image captured by a second imaging unit (11A-11C);
estimating (S902), as a first estimation, a three-dimensional shape of the first subject based on the first subject image extracted in the extracting as the first extraction;
estimating (S904) a second subject state based on the second subject image extracted in the extracting as the second extraction,
acquiring (S905) a predictive image predicted to be acquired in a case where the first subject is captured by the second imaging unit (11A-11C), based on an estimation result of the three-dimensional shape of the first subject and an estimation result of the second subject state; and
determining (S906) whether the first subject and the second subject are an identical subject by comparing the predictive image with the second subject image.

14. A program that when executed on a computer causes the computer to execute the image processing method according to claim 13.

15. A computer-readable storage medium storing the program according to claim 14.
